(19) **Europäisches Patentamt**
**European Patent Office**
**Office européen des brevets**

(11)  **EP 2 341 673 B1**

(12)  **EUROPEAN PATENT SPECIFICATION**

(45) Date of publication and mention
of the grant of the patent:
**05.09.2012  Bulletin 2012/36**

(51) Int Cl.:
***H04L 12/56*** *(2006.01)*

(21) Application number: **11002407.2**

(22) Date of filing: **30.12.2003**

(54) **TECHNIQUES FOR GUARANTEEING BANDWITH WITH AGGREGATE TRAFFIC**

TECHNIKEN ZUM GARANTIEREN VON BANDBREITE MIT AGGREGAT-VERKEHR

TECHNIQUES POUR GARANTIR UNE LARGEUR DE BANDE A UN TRAFFIC GLOBAL

(84) Designated Contracting States:
**AT BE BG CH CY CZ DE DK EE ES FI FR GB GR
HU IE IT LI LU MC NL PT RO SE SI SK TR**

(43) Date of publication of application:
**06.07.2011  Bulletin 2011/27**

(62) Document number(s) of the earlier application(s) in
accordance with Art. 76 EPC:
**03788750.2 / 1 700 420**

(73) Proprietor: **Intel Corporation (INTEL)
Santa Clara, CA 95052 (US)**

(72) Inventor: **You, Hua
Shanghai
Shanghai 200336 (CN)**

(74) Representative: **Beresford, Keith Denis Lewis
Beresford & Co.
16 High Holborn
London
WC1V 6BX (GB)**

(56) References cited:
**EP-A- 1 202 501       EP-A- 1 300 995
WO-A-98/26612        US-A- 5 347 511
US-A- 5 359 593       US-A- 5 982 748
US-B1- 6 477 582**

**Description**

Technical Field

Embodiments of the present invention relate generally to computer networks, and more particularly to bandwidth management for network traffic.

Background Information

Quality of Service (QoS) is the concept that transmission rates, error rates, and other network transmission characteristics can be measured, improved, and to some extent guaranteed in advance of a network transmission. QoS is a significant concern for high bandwidth networks that regularly transmit large amounts of data such as video, audio, multimedia, and the like. Moreover, QoS is problematic for geographically dispersed networks, such as the Internet, where any single network transaction can span multiple sub-networks through multiple Internet Service Providers (ISPs).

. Attempts to provide decent QoS architectures often suffer from scalability issues. That is, independent sub-networks (*e.g.*, ISPs) are required to be too heavily dependent upon one another to produce any viable commercial solution. As soon as independent sub-networks become dependent upon the operational specifics of other sub-networks, they become less scalable and less desirable. When scalability is adequately achieved, the result is usually achieved with overly complex implementation schemes that dramatically decrease network throughput at the expense of providing scalability.

Accordingly a more scalable QoS technique for large geographically disperse networks is needed, where scalability is achieved in a manner that does not significantly impact network throughput and is not overly complex.

The following references are made to the background prior art:

United States Patent Application US 5 982 748 A is directed to controlling admission of connection requests to a network. Here, a class of service for a network request is identified and the traffic of the network analyzed for that class of service. If the bandwidth is not available to support the network transaction request then the request is denied. Service is guaranteed by controlling admission into the network not by borrowing bandwidth at intermediate nodes un an as needed basis.

United States Patent Application US 5 347 511 is directed to labeling network links with metrics and when a new network transaction is injected into the network, all the links that the transaction affects are updated with new metrics based on what the new transaction needs from the links that it will use. This is similar to the above reference in that before something is guaranteed the metrics are calculated and evaluated.

United States Patent Application US 5 359 593 is directed to dynamic bandwidth and adaptation for packet communications in a network. Here, classes of transactions are classified into red or green buckets, the green classification receiving higher priority such that when a green transaction experiences a bottleneck, red transactions arc dropped or queued to give up their bandwidth.

International Patent Application WO 98/26612A is directed to creating virtual paths or virtual networks through a network. Here, each virtual path or network is monitored much like the metric approach of US 5 347 511 and before a transaction is assigned a virtual network or path the bandwidth is believed to exist to service it.

European Patent Application EP 1 300 995 A is directed to resource management in a heterogeneous networks. Here, a network transaction is assured of adequate bandwidth because an overbooked amount of bandwidth is set on the nodes for the path of a transaction. In other words, in this technique bandwidth is overbooked at the nodes a transaction will traverse within the network to ensure the bandwidth exists when needed by the transaction.

United States Patent Application US 6 477 582 B1 is directed to a technique for conservative link selection during a network transaction. That is, the technique considers a path for a transaction based on optimizing the most available bandwidth along that path and the least expense associated with using that path.

European Patent Application EP 1 202 501A is directed to hierarchical network management for network transactions. Here, the management of a network transaction through the network occurs at multiple hierarchical layers of the TCP/IP protocol stack.

**Summary of the Invention**

The present invention provides a method for managing bandwidth as set out in independent claims 1 & 5, a network as set forth in independent claim 12, and an apparatus for use in such a network as set forth in independent claim 14.

Brief Description of the Drawings

FIG. 1 is diagram of a network to guarantee service in accordance with one embodiment of the invention.

FIG. 2 is a flow diagram of a method to guarantee network service in accordance with one embodiment of the invention.

FIG. 3 is a flow diagram of a method to manage bandwidth of a guaranteed network service request in accordance with one embodiment of the invention.

FIG. 4 is a diagram of a bandwidth management system in accordance with one embodiment of the invention.

Description of the Embodiments

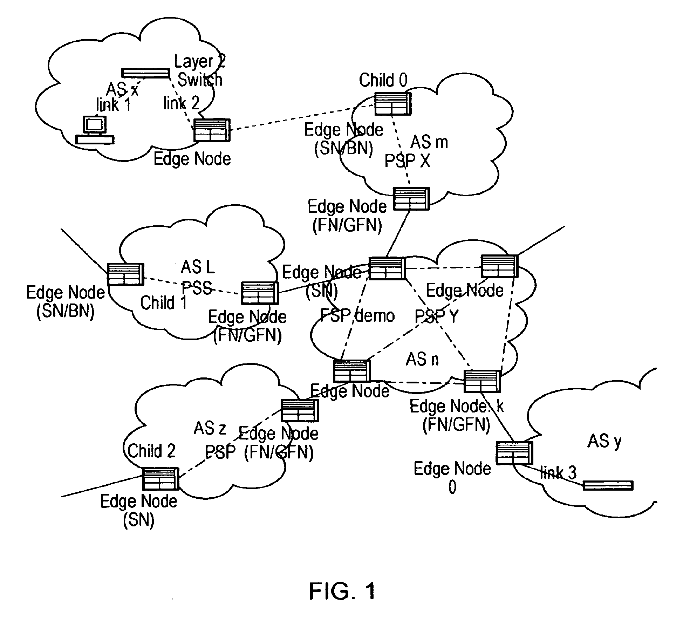

FIG. 1 is a diagram of a network 100 that guarantees service for network transactions before the transactions are processed within the network 100. The technique is implemented in a computer-accessible medium within processing devices of a network. These devices can be routers, hubs, bridges, switches, gateways, firewalls, proxies, servers, client workstations, and the like. The network 100 is logically represented in the computer-accessible medium as a tree where each branch of the tree is a node. A node is a processing device that participates in a network transaction by routing data packets associated with the network transaction between originating nodes and destination nodes.

The embodiments of this invention provide improved techniques for guaranteeing service betweens node of a network 100. Guaranteeing means that bandwidth availability is assured before a network transaction commences, assuming that the nodes and links of the network 100 remain operational and do not otherwise fail. One of ordinary skill in the art readily appreciates that an absolute assurance that a network transaction will complete within a network 100 is not feasible, since links and nodes can fail abnormally due to hardware or software failures, or links and nodes can fail due to planned maintenance activity.

The network 100 depicted in FIG. 1 includes a variety of Autonomous Systems (AS) that can operate independently of one another. These ASs can be viewed as independent sub-networks, such as ISPs, private networks and the like. The sub-networks can geographically span the entire world. Within each AS, a number of processing nodes are used to directly communicate with other external ASs; these nodes are referred to as edge nodes.

The entire network 100 is logically organized as a tree. In FIG. 1, that tree is inverted, such that the root of the tree is identified by AS Y and the farthest leaf is identified by AS X. The root node of the tree is edge node D. AS N is a father of children 0, 1, and 2. Moreover, the children are considered brothers to each other. Each AS can itself be considered a sub-tree, having its own internal root node, father node, and brother nodes. Moreover, the children of a father are considered its sons. Thus, father AS N has sons identified as Child 0, Child 1, and Child 2. Moreover, AS N is considered a grandfather of AS X.

A network transaction is a communication between any two or more nodes of the network 100. A node that originates the network transaction is called an originating node. A network transaction transfers data packets from an originating node to a destination node. Thus, the node that the originating node desires to communicate with via a network transaction is referred to as a destination node. A network transaction will include the transfer of one or more network data packets from the originating node through one or more intermediate nodes to the destination node. Thus, the network transaction is associated with a path through the network from the originating node to the destination node. A variety of path generating and dynamic modifying algorithms are well known in the networking arts and readily achievable using existing network architectures and protocols. All such algorithms and architectures are capable of being used with the embodiments of this invention.

The volume of and rate at which network packets are present and sent between any two nodes of the network 100, is referred to as the bandwidth. These data transfers occur over the links of the network 100, the links connect the nodes. Each link can be capable of handling different types of media, different volumes, different rates, and a different number of concurrent sessions of network transactions. The hard and soft limitations of each link are known in advance by each node based on its hardware and software configurations. These limitations can be communicated between nodes using well known and existing networking protocols and technologies.

When an originating node requests a particular network transaction directed to a destination node, the originating node would like to know in advance of commencing the transaction that a sufficient amount of bandwidth will exist within the network 100 in order to process the transaction to the destination node. In embodiments of the present invention, this is achieved with a Bandwidth Conservation Criterion (BCC) calculation. The originating node makes a request for a network transaction to the first processing node defined in the network path. The first processing node identifies the total available bandwidth of the destination node and sums the bandwidth of all outstanding traffic that is destined for the destination node. This calculation is the BCC calculation that guarantees the originating node that bandwidth will exist to satisfy the transaction. IN response to the guarantee, the originating node commences the network transaction through the network 100.

As an example, consider an originating node A that requests a network transaction requiring 10 KB of bandwidth. The transaction is directed to destination node N and is initially requested of initial processing node B. N can have a maximum bandwidth of 128 KB. When A makes the request to B, the current aggregate traffic directed to N is 110 KB.

In the present example, B applies BCC to determine that if the network transaction is guaranteed there will be 120 KB of current traffic directed towards N, which is less than the maximum bandwidth of 128 KB that N can handle at any point in time. Thus, B makes the BCC calculation when it receives the request from A and determines that the network transaction can be guaranteed. The guarantee is then communicated from B to A, and the network transaction commences.

BCC can be defined with the following equations, where the originating node is the node identified in AS X and the destination node is edge node D of AS Y (the root of the tree):

$$\begin{cases} \sum_i r_{ij}^D \le r_{jk}^D \\ B_{ij}^X = \sum_y r_{ij}^y \end{cases}$$

$B_{ij}^X$ is the overall bandwidth of AS X available between edge nodes i and j and $r_{ij}^D$, the corresponding portion of AS X in the tree rooted by edge node D. Thus, if the bandwidth request associated with a network transaction when combined with the total aggregate bandwidth destined for edge node D is less than the total bandwidth that edge node D can handle, the BCC equation holds true and a network transaction can be guaranteed service.

This calculation is a scalable approach, because all that is needed is a calculation that sums existing aggregate traffic that is being directed to a destination node along with the known bandwidth limit associated with the destination node. By aggregate traffic it is meant that all current network traffic that is active in the network and is currently being directed to the destination node. However, at any given point as the network transaction is progressing through the network 100, one or more nodes may not have sufficient bandwidth to handle the network request. Thus, BCC can be augmented to make necessary dynamic adjustments as needed at each processing node associated with a network path of a network transaction, which is guaranteed by the BCC equation.

For example, a network transaction may progress after a guarantee of service from AS m to edge node j' of AS Y. At this point in time, however, the current bandwidth for the link between node j' and k (link j'-k) may be at capacity and not capable of handling the network transaction. Without the ability for link j'-k to increase its bandwidth the transaction may fail or become unreasonably delayed. Thus, the static approach of BCC can be augmented with a Closest relation AllocatioN (CLAN) technique, that permits nodes to borrow bandwidth from adjacent (brother, son, father) nodes.

With the CLAN technique, each node of the network 100 monitors the traffic volume occurring with its link to its adjacent nodes, more specifically with its father node. When a particular node notices a reduction in bandwidth occurring with its link to its father node, that reduction is known to the father node (adjacent node). This reserved bandwidth is held by the father node and delivered to other more needing sons of the father when needed.

Thus, in the example, presented above, if the link j'-k can hold 128 KB volume and is at capacity when a network transaction comes along that needs to reach node k, then node k can borrow 64 KB from one or both of its two remaining sons. Node k knows the 64 KB is obtainable from one or its two remaining sons, because if finds the two remaining sons having chunks of available bandwidth to their father node K during processing and request bandwidth from their father node when needed.

For example, consider that the three links to node k each have a total bandwidth capacity of 128 KB and consider further that each son node is configured to manage only 64 KB of capacity at any one time and configured to release and to notify the father node k whenever bandwidth is needed above 64 KB and the father node will be aware when capacity above 64 KB is no longer needed for any given transaction. The father node k then manages this excess bandwidth and when a network transaction moving from link j'-k, in our present example, needs additional bandwidth; the father node k has it in reserve to deliver to the son node j', because the bandwidth has been previously borrowed from one or both brothers of node j'.

Borrowing can occur between any two adjacent nodes or brother nodes. Moreover, the borrowing need not occur within a single AS. For example edge node j' connects two different ASs (L and M) to AS N. Thus, edge node j of AS M can borrow from the appropriate edge node of AS L in order to complete a transaction over link j-j'. This occurs through j', which acts as an adjacent node or father node to both node j and the edge node of AS L that directly connects to node j'.

Thus, with CLAN, adjacent nodes establish policies with one another such that chunks of bandwidth are managed by father nodes on behalf of their sons. These chunks of bandwidth are considered reserves, which must be requested before the reserves can be used from the appropriate father node. Thus, son nodes borrow, via their father, bandwidth that exceeds a pre-negotiated amount; the bandwidth borrowed comes from the brother nodes of a borrowing son node, but is managed by their father node. In a similar fashion father node can borrow from its father within the network 100, such that at any one time a borrowing node may be getting bandwidth from its brothers and from brothers of its father.

Hierarchical relationships between nodes of a network are managed in order to borrow bandwidth with the CLAN technique; the borrowing is needed for a network transaction that is progressing through nodes of a network. That is, a node in need of more bandwidth uses its closest relationship to adjacent nodes to acquire the necessary bandwidth allocation and this borrowing can progress upward through that node's relatives after first borrowing from its closest relation.

Further, the BCC calculation permits a transaction guarantee to be given to an originating node of a network transaction, where that network transaction requires a certain amount of bandwidth through a network 100 in order to reach a destination node. Moreover, as the network transaction progresses through the network 100, if any particular link between nodes lacks sufficient bandwidth to process the transaction, the bandwidth can be temporarily borrowed from adjacent nodes using the CLAN technique. The BCC and CLAN techniques provide a scalable solution to QoS for ASs or independent networks. These techniques are not overly complex and can be implemented within existing network protocols and software designed to calculate the BCC and implement the CLAN technique.

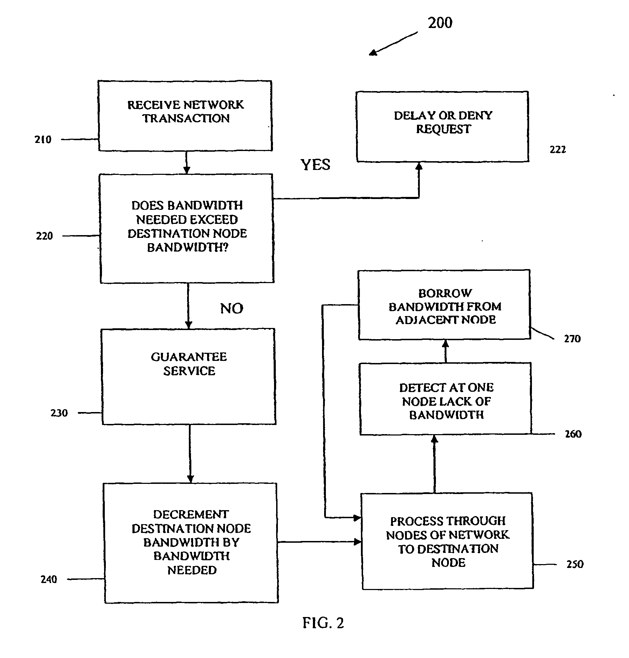

FIG. 2 is a flow diagram of one method 200 to guarantee network service by implementing the BCC and CLAN techniques discussed above with FIG. 1. The method 200 is implemented in a computer accessible medium and processes on each node of a network. The nodes are processing devices in the network which originate, route, and process network transactions through a network. The method 200 can be implemented within each node of the network as software, firmware, and/or via network protocols.

Initially, at 210, a request for a network transaction is received by a first processing node. The request originates from an originating node. The network transaction is associated with a network path which defines one or more routes for network packets associated with the network transaction to traverse through one or more intermediate nodes of the network to a destination node. The first processing node is the first node of that network path.

When the first processing node receives the network request from the originating node, it determines whether the request is acceptable based on the BCC calculation by checking if the aggregate traffic existing in the network which is destined for the destination node plus the bandwidth needed by the network transaction exceeds the destination node's maximum bandwidth. The BCC calculation and the appropriate check are made at 220. If the aggregate traffic plus the bandwidth needed does exceed the destination node's bandwidth limit, then, at 222, the network transaction cannot be guaranteed and the originating node is notified of the same.

However, if at 220, the aggregate traffic plus the bandwidth needed does not exceed the destination node's bandwidth limit, then, at 230, the first processing node guarantees to the originating node that the requested network transaction will have sufficient bandwidth to reach the destination node within the network. In one embodiment, as soon as this guarantee occurs, the total available bandwidth at the destination node is decremented at 240 by the bandwidth which is needed to satisfy the current network transaction.

Of course there are a variety of ways to implement the BCC calculation. One technique would be to have the destination node keep track of traffic headed its way and maintain a current available bandwidth counter, which is constantly and dynamically changing. Another way is to have each node dynamically make queries to other nodes in the network to dynamically calculate the BCC. One skilled in the art will readily appreciate that other techniques can also exist. All such techniques, which resolve the BCC calculation, are intended to be included in the embodiments of this invention.

Once the first processing node guarantees service, the network transaction commences to process through the network to the destination node at 250. In some embodiments, at some point, during the processing of the network transaction, a particular processing node may determine that it actually lacks the necessary bandwidth needed to process the network transaction through a link to a next node of the network path associated with the network transaction, as depicted at 260. Each node of the network dynamically implements the CLAN technique discussed above with FIG. 1 in order to dynamically resolve this problem.

Accordingly, at 270, the particular processing node that lacks sufficient bandwidth borrows the needed bandwidth from an adjacent node in order to process the network transaction. Thus, the father node of the particular processing node manages reserve bandwidth on behalf of the particular processing node and the particular processing node's brother nodes. These nodes pre-establish with one another the amount of excess bandwidth that the father node will be responsible for managing and delivering, if and when excess bandwidth is needed by any of the sons of the father. Additionally, in some embodiments, the father node of a needy son may not have sufficient bandwidth to satisfy a needing son's bandwidth request. In these situations, the father contacts his father (adjacent node to the father and grandfather of the needing son) in order to borrow bandwidth from brothers of the father (grandfather to the needing son). This borrowing continues as needed according to the rules associated with the CLAN technique, as described above in FIG. 1.

The embodiments of method 200 demonstrate how the BCC and CLAN technique can be implemented and processed within nodes of a network in order to provide a scalable QoS from heterogeneous ASs logically organized as a single network. These embodiments are not complex and can be deployed with software processing on each network node that uses conventional network protocols to communicate between nodes.

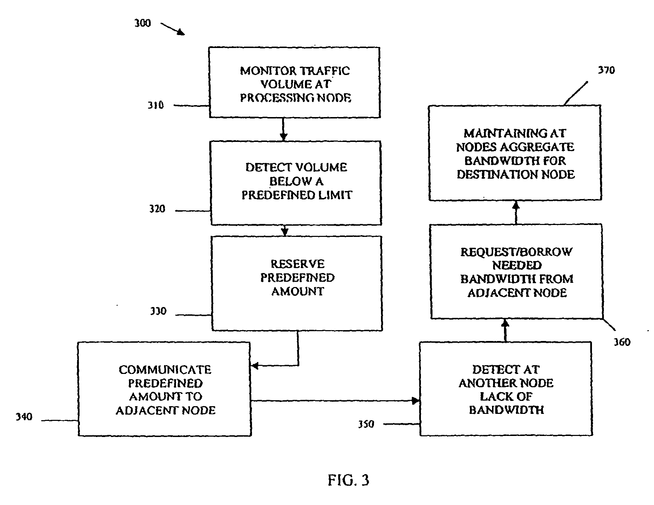

FIG. 3 is a flow diagram of one method 300 to manage bandwidth of a guaranteed network service request. The method 300 is implemented within each node of a network and is implemented in a computer accessible medium. The method 300 represents processing performed by each node and some interactions occurring between nodes during a network transaction. The method 300 represents embodiments of the CLAN technique, where nodes borrow and manage bandwidth within a network during a network transaction.

At 310, a processing node associated with processing a network transaction through a network to a destination node monitors its own traffic volume. The processing node has previously used policies known to its adjacent nodes (brothers, father, and sons) in order to configure it to monitor traffic at specific predefined levels. When traffic falls below the predefined limit, then this is detected at 320, and predefined amounts of bandwidth that are available are reserved as being unavailable to the processing node at 330.

Those predefined amounts of reserved bandwidth are known to the processing node's father node (adjacent node) at 340. The father node manages a pool of reserved bandwidth on behalf of the processing node and on behalf of brothers of the processing node. Thus, at 350, when another node (brother node of the original processing node) is processing its own network transaction and determines that it needs additional bandwidth to process the network transaction through to the father node, the brother node makes a request at 360 to borrow the needed bandwidth from the father node (adjacent node). The brother has directly borrowed the bandwidth from the father, but indirectly borrowed it from the excess capacity that the brother's siblings had previously deposited with the father for purposes of management.

This bandwidth management and borrowing technique reflects an example implementation of the CLAN technique discussed above with FIGS. 1 and 2. Policies about management associated with bandwidth deposits (*e.g.*, reservations) and withdrawals are communicated between adjacent nodes of the network. Moreover, at 370, each node of the network is capable of resolving the BCC calculation when needed by maintaining techniques for resolving (*e.g.*, calculating) the aggregate bandwidth associated with any particular destination node of a particular network transaction.

Method 300 provides an example implementation of the CLAN technique and maintains the capabilities when needed to perform the BCC calculation. This demonstrates how a heterogeneous network consisting of a plurality of nodes can interact in a scalable fashion with one another to provide QoS for a network transaction.

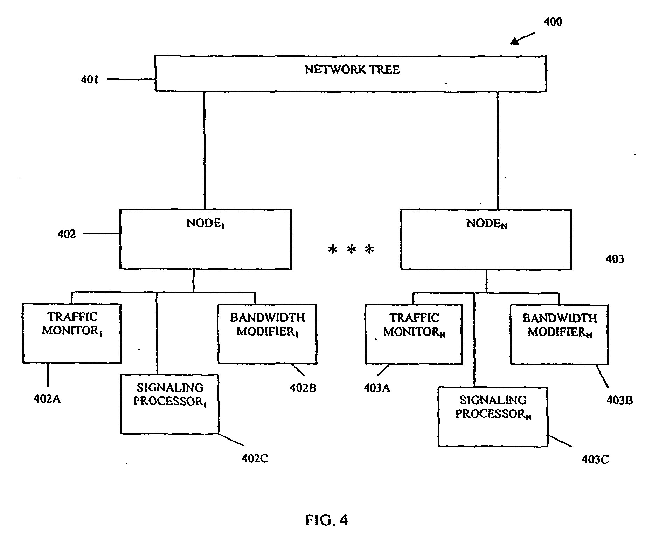

FIG. 4 is a diagram of one bandwidth management system 400. The bandwidth management system 400 represent an embodiment of the BCC and CLAN technique within a heterogeneous network, where the network includes a plurality of sub-networks identified as ASs. The bandwidth management system 400 is implemented in a computer accessible medium.

The bandwidth management system 400 includes logically representing the heterogeneous network as a network tree 401, wherein branches of the tree 401 can include other sub-trees. The tree 401 can be entirely managed and manipulated by pointers and metadata associated with the attributes and characteristics of the tree 401. The tree 401 includes a plurality of nodes 402 and 403. Each node 402 or 403 assumes a designation as a son, father, and/or brother depending upon its context within the tree to another adjacent node 402 or 403. Thus, a single node 402 or 403 can have multiple designations with respect to adjacent nodes 402 and 403. A node can also have a designation with respect to non-adjacent nodes, such as grandfather, grandson, uncle, and the like.

Each node 402 or 403 also includes its own traffic monitor 402A-403A, bandwidth modifier 402B-403B, and signaling processor 402C-403C. These entities combine both software logic and existing networking protocols to perform the BCC and CLAN techniques.

Thus, the traffic monitor 402A-403A monitors traffic on its respective node 402 or 403 and communicates traffic information to the traffic monitors 402A-403A of its adjacent nodes 402 or 403. This communication and monitoring is useful in resolving the processing associated with the BCC and CLAN techniques. For example, traffic volumes can be aggregated to resolve the BCC calculation for a particular destination node of a particular network transaction. Moreover, the traffic volumes can be used to determine whether to deposit bandwidth with or to withdraw on loan bandwidth from an adjacent node 402 or 403.

The bandwidth modifier 402B-403B communicates with the traffic monitor 402A-403A in order to adjust bandwidth associated with its particular processing node 402 or 403. That is, when the traffic monitor 402A-403A reports bandwidth below a predefined and pre-negotiated amount, the bandwidth modifier 402B-403B can be used to implement the CLAN technique and claim additional bandwidth not being used as reserved bandwidth, which is then deposited with an adjacent node 402 or 403. Conversely, when a node 402 or 403 needs additional bandwidth, the bandwidth modifier 402B-403B can be used to detect this need based on a current transaction and based on reports of bandwidth usage from the traffic monitor 402A-403A in order to request more bandwidth on loan from an adjacent node 402 or 403.

The signaling processor 402C-403C can be used to actually allocate and reallocate need bandwidth or excess bandwidth from an adjacent node 402 or 403. That is, the actual device that permits bandwidth to be redirected to a specified link can be controlled with the signaling processor 402C-403C. In essence, bandwidth is reallocated and throttled up or throttled down over physical links when bandwidth is deposited or withdrawn from an adjacent node 402 or 403. This throttling is the responsibility of the signaling processor 402C-403C.

During operation, the traffic monitor 402A-403A reports traffic on its node 402 or 403 to the adjacent nodes 402 or 403. The bandwidth modifier 402B-403B uses this in combination with existing network requests to modify bandwidth. The signaling processor 402C-403C detects modified bandwidth and drives the underlying bandwidth device to throttle up and down affected links of the nodes 402 and 403.

The use of the traffic monitor 402A-403A, the bandwidth modifier 402B-403B, and the signaling processor 402C-403C provides a modular event-driven implementation of the BCC and CLAN technique that is scalable across a large heterogeneous network. However, one of ordinary skill in the art appreciates that other implementations and architectures are possible where the functions of the modules are further isolated into more modules or combined into less modules. All such modifications to this architecture that are designed to perform the BCC or CLAN techniques fall within the scope of the embodiments for this invention.

The above description is illustrative, and not restrictive. Many other embodiments will be apparent to those of skill in the art upon reviewing the above description. The scope of embodiments of the invention should therefore be determined with reference to the appended claims, along with the full scope of equivalents to which such claims are entitled.

**Claims**

1. A method (200) for managing bandwidth, comprising:

    receiving (210) at a first processing node a network transaction request from an originating node;
    determining (220) whether a destination node has sufficient bandwidth to satisfy the request; and if so
    informing (230) the originating node that service is guaranteed to a destination node via a plurality of intermediate nodes;
    decrementing (240) from a destination node bandwidth a transaction bandwidth needed for servicing the transaction;
    processing (250) the network transaction;
    detecting (260) during the processing at one of the intermediate nodes that an insufficient bandwidth is available for the network transaction; and
    borrowing (270), by the one intermediate node, from an adjacent node the insufficient bandwidth needed to process the network transaction through the one intermediate node.

2. The method of claim 1 wherein borrowing (270) further includes requesting a reserved bandwidth that the adjacent node previously set aside from another adjacent node.

3. The method of claim 1 wherein borrowing (270) includes additional borrowing, by the adjacent node, from another node that is adjacent to the adjacent node wherein at least a portion of the insufficient bandwidth is borrowed.

4. The method of claim 1 further comprising maintaining and coordinating the destination node bandwidth at the processing node, the intermediate nodes, and the destination node.

5. A method (300) for managing bandwidth, comprising:

    monitoring (310) traffic volume at a processing node of a network;
    detecting (320) that the volume has fallen below a predefined limit by a predefined amount;
    reserving (330) the predefined amount; and
    communicating (340) the reserved predefined amount to an adjacent node.

6. The method of claim 5 further comprising:

    detecting (350) a network transaction request that exceeds an available bandwidth at a different processing node; and
    requesting (360) a needed bandwidth amount to service the network transaction from the reserved predefined amount held by the adjacent node.

7. The method of claim 5 further comprising adding the reserved predefined amount to an available bandwidth at the adjacent node.

8. The method of claim 7 further comprising decrementing, at the adjacent node, a requested bandwidth amount from the available bandwidth after receiving a needed bandwidth request from a different processing node.

9. The method of claim 8 further comprising borrowing (360), at the adjacent node, from an adjacent node that is adjacent to the adjacent node, a least a portion of the requested bandwidth amount if the requested bandwidth amount exceeds the available bandwidth.

10. The method of claim 5 further comprising maintaining by the processing node a list of nodes connected directly to the processing node which includes the adjacent node. -

11. The method of claim 5 further comprising maintaining (370) by the processing node an aggregate total bandwidth available at a destination node.

12. A network, comprising:

    an originating node to make a request for a network transaction which is directed to a destination node within a network; and

a first processing node to initially receive the request, wherein the first processing node determines whether the destination node can satisfy the network transaction and if so guarantees the originating node that sufficient bandwidth is available in the network to complete the network transaction through the first processing node, one or more intermediate nodes, and the destination node;

wherein

the originating node and the first processing node commence processing the network transaction after the originating node receives the guarantee; and

one of the intermediate nodes detects that it lacks sufficient bandwidth to process the network transaction, and wherein the one intermediate node borrows the sufficient bandwidth from one of its adjacent nodes to process the network transaction.

13. The network of claim 12, wherein the one intermediate node borrows the sufficient bandwidth by reclaiming previously reserved bandwidth which was communicated to its adjacent node by another node.

14. An apparatus (400) for use in a network, said apparatus comprising:

a network node (402, 403) to process a network transaction, the network node comprising:

a traffic monitor ($402_A$, $403_A$) to monitor network traffic and to communicate that network traffic to an adjacent node;
a bandwidth modifier ($402_B$, $403_B$) to adjust bandwidth allocation based on communication with the traffic monitor; and
a signalling processor ($402_C$, $403_C$) to allocate available bandwidth based on communication with the traffic monitor ($402_A$, $403_A$) and the bandwidth modifier($402_B$, $403_B$);
wherein the node:

uses its traffic monitor($402_A$, $403_A$), bandwidth modifier ($402_B$, $403_B$), and signalling processor ($402_C$, $403_C$) to reserve a predefined amount of bandwidth if it becomes available in advance of any request for that predefined amount and communicates that reservation to the adjacent node;
maintains links to the adjacent node and other nodes, and wherein the links represent the node's location within a tree that logically represents a network;

and

the links define a designation or relationship for the node with respect to the adjacent node and the other nodes of the tree.

**Patentansprüche**

1. Verfahren (200) zur Bandbreitenverwaltung, umfassend:

Empfangen (210) einer Netzwerktransaktionsanfrage von einem Ursprungsknoten an einem ersten Verarbeitungsknoten;
Bestimmen (220), ob ein Zielknoten eine zur Bearbeitung der Anfrage ausreichende Bandbreite aufweist; und falls das so ist,
Informieren (230) des Ursprungsknotens, dass der Betrieb über mehrerer Zwischenknoten bis zu einem Zielknoten garantiert ist;
Dekrementieren (240) einer zur Bearbeitung der Transaktion erforderlichen Transaktionsbandbreite von einer Zielknotenbandbreite;
Verarbeiten (250) der Netzwerktransaktion;
Detektieren (260) während der Verarbeitung an einem der Zwischenknoten, dass für die Netzwerktransaktion keine ausreichende Bandbreite verfügbar ist; und
Leihen (270), durch den einen Zwischenknoten, der zur Verarbeitung der Netzwerktransaktion durch den einen Zwischenknoten erforderlichen nicht-ausreichenden Bandbreite von einem benachbarten Knoten.

2. Verfahren nach Anspruch 1, wobei das Leihen (270) ferner das Anfragen nach einer reservierten Bandbreite beinhaltet, die der benachbarte Knoten zuvor von einem anderen benachbarten Knoten an die Seite gelegt hat.

3. Verfahren nach Anspruch 1, wobei das Leihen (270) das zusätzliche Leihen, durch den benachbarten Knoten, von einem anderen Knoten beinhaltet, der dem benachbarten Knoten benachbart ist, wobei mindestens ein Teil der nicht-ausreichenden Bandbreite geliehen wird.

4. Verfahren nach Anspruch 1, ferner umfassend das Erhalten und Koordinieren der Zielknotenbandbreite an dem Verarbeitungsknoten, dem Zwischenknoten und dem Zielknoten.

5. Verfahren (300) zur Bandbreitenverwaltung, umfassend:

Überwachen (310) eines Verkehrsvolumens an einem Verarbeitungsknoten eines Netzwerks;

Detektieren (320), dass das Volumen um eine vordefinierte Menge unter eine vordefinierte Grenze gefallen ist;

Reservieren (330) der vordefinierten Menge und Kommunizieren (340) der reservierten vordefinierten Menge an einen benachbarten Knoten.

6. Verfahren nach Anspruch 5, ferner umfassend:

Detektieren (350) einer Netzwerktransaktionsanfrage, die eine verfügbare Bandbreite an einem verschiedenen Verarbeitungsknoten überschreitet; und

Anfragen (360) nach einer erforderlichen Bandbreitenmenge zum Bearbeiten der Netzwerktransaktion von der vom benachbarten Knoten gehaltenen reservierten vordefinierten Menge.

7. Verfahren nach Anspruch 5, ferner umfassend das Hinzufügen der reservierten vordefinierten Menge zu einer verfügbaren Bandbreite am benachbarten Knoten.

8. Verfahren nach Anspruch 7, ferner umfassend das Dekrementieren, am benachbarten Knoten, einer angefragten Bandbreitenmenge von der verfügbaren Bandbreite nach dem Empfang einer Anfrage nach erforderlicher Bandbreite von einem anderen Verarbeitungsknoten.

9. Verfahren nach Anspruch 8, ferner umfassend das Leihen (360), am benachbarten Knoten, zumindest eines Teils der erforderlichen Bandbreitenmenge von einem benachbarten Knoten, der dem benachbarten Knoten benachbart ist, falls die angefragte Bandbreitenmenge die verfügbare Bandbreite überschreitet.

10. Verfahren nach Anspruch 5, ferner umfassend das Führen, durch den Verarbeitungsknoten, einer Liste von unmittelbar mit dem Verarbeitungsknoten verbundenen Knoten, die den benachbarten Knoten enthält.

11. Verfahren nach Anspruch 5, ferner umfassend das Erhalten (370), durch den Verarbeitungsknoten, einer an einem Zielknoten verfügbaren Gesamtsummenbandbreite.

12. Netzwerk, umfassend:

einen Ursprungsknoten zum Anfragen einer Netzwerktransaktion, die sich an einen Zielknoten innerhalb eines Netzwerks richtet; und

einen ersten Verarbeitungsknoten zum ersten Empfangen der Anfrage, wobei der erste Verarbeitungsknoten bestimmt, ob der Zielknoten die Netzwerktransaktion bearbeiten kann, und, falls das so ist, dem Ursprungsknoten garantiert, dass ausreichende Bandbreite zum Erledigen der Netzwerktransaktion über den ersten Verarbeitungsknoten, einen oder mehrere Zwischenknoten und den Zielknoten im Netzwerk verfügbar ist;

wobei

der Ursprungsknoten und der erste Verarbeitungsknoten die Verarbeitung der Netzwerktransaktion beginnen, nachdem der Ursprungsknoten die Garantie erhält; und

einer der Zwischenknoten detektiert, dass es ihm an ausreichender Bandbreite zum Verarbeiten der Netzwerktransaktion mangelt, und wobei der eine Zwischenknoten die ausreichende Bandbreite von einem seiner benachbarten Knoten zum Verarbeiten der Netzwerktransaktion leiht.

13. Netzwerk nach Anspruch 12, wobei der eine Zwischenknoten die ausreichende Bandbreite durch Wiederbeanspruchen zuvor reservierter Bandbreite, die seinem benachbarten Knoten von einem anderen Knoten kommuniziert wurde, leiht.

14. Vorrichtung (400) zur Verwendung in einem Netzwerk, wobei die Vorrichtung umfasst:

einen Netzwerkknoten (402, 403) zum Verarbeiten einer Netzwerktransaktion, wobei der Netzwerkknoten umfasst:

eine Verkehrsüberwachungseinrichtung ($402_A$, $403_A$) zum Überwachen von Netzwerkverkehr und zum Kommunizieren des Netzwerkverkehrs an einen benachbarten Knoten;

eine Bandbreitenmodifikationseinrichtung ($402_B$, $403_B$) zum Anpassen der Bandbreitenallokation auf der Grundlage der Kommunikation mit der Verkehrsüberwachungseinrichtung und

eine Signalgebungsverarbeitungseinrichtung ($402_C$, $403_C$) zum Allozieren verfügbarer Bandbreite auf der Grundlage von Kommunikation mit der Verkehrsüberwachungseinrichtung ($402_A$, $403_A$) und der Bandbreitenmodifikationseinrichtung ($402_B$, $403_B$); wobei der Knoten:

seine Verkehrsüberwachungseinrichtung ($402_A$, $403_A$), seine Bandbreitenmodifikationseinrichtung ($402_B$, $403_B$) und seine Signalgebungsverarbeitungseinrichtung ($402_C$, $403_C$) dazu verwendet, eine vordefinierte Bandbreitenmenge zu reservieren, falls sie vor jeglicher Anfrage nach der vordefinierten Menge verfügbar wird, und die Reservierung an den benachbarten Knoten kommuniziert;

Verbindungen zum benachbarten Knoten und zu anderen Knoten aufrechterhält, wobei die Verbindungen den Ort des Knotens in einem Baum, der ein Netzwerk logisch darstellt, darstellen; und

die Verbindungen eine Zuweisung oder Beziehung für den Knoten bezüglich des benachbarten Knotens und der anderen Knoten des Baums definieren.

**Revendications**

1. Procédé (200) destiné à gérer la bande passante, comprenant les étapes consistant à :

recevoir (210) sur un premier noeud de traitement une demande de transaction sur le réseau provenant d'un noeud d'origine ;

déterminer (220) si un noeud de destination possède suffisamment de bande passante pour satisfaire la demande ; et, si tel est le cas :

informer (230) le noeud d'origine que le service est garanti vers un noeud de destination, via une pluralité de noeuds intermédiaires ;

soustraire (240) d'une bande passante du noeud de destination une bande passante de transaction qui est nécessaire pour desservir la transaction ;

traiter (250) la transaction sur le réseau ;

pendant le traitement, détecter (260) sur un des noeuds intermédiaires qu'une bande passante disponible est insuffisante pour la transaction sur le réseau ; et

emprunter (270) par ledit noeud intermédiaire, auprès d'un noeud adjacent, la bande passante manquante qui est nécessaire pour traiter la transaction sur le réseau par ledit noeud intermédiaire.

2. Procédé selon la revendication 1, dans lequel l'étape d'emprunt (270) comprend en outre l'étape consistant à demander une bande passante que le noeud adjacent avait antérieurement réservée en provenance d'un autre noeud adjacent.

3. Procédé selon la revendication 1, dans lequel l'étape d'emprunt (270) comprend l'étape consistant à emprunter par le noeud adjacent, auprès d'un autre noeud qui est adjacent au noeud adjacent, dans lequel au moins une partie de la bande passante manquante est empruntée.

4. Procédé selon la revendication 1, comprenant en outre les étapes consistant à maintenir et coordonner la bande passante du noeud de destination au niveau du noeud de traitement, des noeuds intermédiaires et du noeud de destination.

5. Procédé (300) de gestion de la bande passante, comprenant les étapes consistant à :

surveiller (310) le volume du trafic sur un noeud de traitement du réseau ;

détecter (320) que le volume est tombé au-dessous d'une limite prédéterminée, d'une quantité prédéterminée ;

réserver (330) la quantité prédéterminée ; et

communiquer (340) la quantité prédéterminée ainsi réservée à un noeud adjacent.

6. Procédé selon la revendication 5, comprenant en outre les étapes consistant à :

détecter (350) une demande de transaction sur le réseau qui dépasse une bande passante disponible sur un noeud de traitement différent ; et

demander (360) une quantité de bande passante nécessaire pour desservir la transaction sur le réseau, provenant de la quantité prédéterminée réservée que détient le noeud adjacent.

7. Procédé selon la revendication 5, comprenant en outre l'étape consistant à additionner la quantité prédéterminée réservée à une bande passante disponible sur le noeud adjacent.

8. Procédé selon la revendication 7, comprenant en outre l'étape consistant à soustraire, sur le noeud adjacent, une quantité de bande passante demandée de la bande passante disponible après réception d'une demande de bande passante nécessaire provenant d'un noeud de traitement différent.

9. Procédé selon la revendication 8, comprenant en outre l'étape consistant à emprunter (360), sur le noeud adjacent, auprès d'un noeud adjacent qui est adjacent au noeud adjacent, au moins une partie de la quantité de bande passante demandée, si la quantité de bande passante demandée dépasse la bande passante disponible.

10. Procédé selon la revendication 5, comprenant en outre l'étape consistant à maintenir, par le noeud de traitement, une liste de noeuds connectés directement au noeud de traitement, contenant le noeud adjacent.

11. Procédé selon la revendication 5, comprenant en outre l'étape consistant à maintenir (370) par le noeud de traitement une bande passante totale agrégée qui est disponible sur un noeud de destination.

12. Réseau comprenant :

un noeud d'origine destiné à soumettre une demande de transaction sur le réseau, qui est adressée à un noeud de destination sur un réseau ; et
un premier noeud de traitement destiné à recevoir initialement la demande, dans lequel le premier noeud de traitement détermine si le noeud de destination peut satisfaire la transaction sur le réseau et, si tel est le cas, garantit au noeud d'origine qu'une bande passante suffisante est disponible sur le réseau pour achever la transaction sur le réseau via le premier noeud de traitement, un ou plusieurs noeuds intermédiaires et le noeud de destination ;
dans lequel :

le noeud d'origine et le premier noeud de traitement commencent à traiter la transaction sur le réseau après que le noeud d'origine a reçu la garantie ; et
un des noeuds intermédiaires détecte qu'il manque de la bande passante pour traiter la transaction sur le réseau et dans lequel ledit noeud intermédiaire emprunte la bande passante manquante auprès de l'un des noeuds qui lui sont adjacents pour traiter la transaction sur le réseau.

13. Réseau selon la revendication 12, dans lequel ledit noeud intermédiaire emprunte la bande passante manquante en réclamant une bande passante réservée antérieurement, qui avait été communiquée au noeud qui lui est adjacent par un autre noeud.

14. Appareil (400) destiné à être utilisé sur un réseau, ledit appareil comprenant :

un noeud de réseau (402, 403) destiné à traiter une transaction sur le réseau, le noeud de réseau comprenant :

un moyen de surveillance du trafic ($402_A$, $403_A$), destiné à surveiller le trafic du réseau et à communiquer ce trafic du réseau à un noeud adjacent ;
un moyen de modification de la bande passante ($402_B$, $403_B$), destiné à ajuster l'attribution de la bande passante en fonction d'une communication avec le moyen de surveillance du trafic ; et
un processeur de signalisation ($402_C$, $403_C$), destiné à attribuer la bande passante disponible en fonction d'une communication avec le moyen de surveillance du trafic

($402_A$, $403_A$) et le moyen de modification de la bande passante ($402_B$, $403_B$) ; dans lequel le noeud :

utilise son moyen de surveillance du trafic ($402_A$, $403_A$), son moyen de modification de la bande passante ($402_B$, $403_B$) et son processeur de signalisation ($402_C$, $403_C$) pour réserver une quantité prédéterminée de bande passante si celle-ci devient disponible, avant toute demande intéressant cette quantité prédéterminée, et communique cette réservation au noeud adjacent ;
maintient des liens vers le noeud adjacent et d'autres noeuds, les liens représentant la position du noeud dans un arbre qui représente logiquement un réseau ; et
les liens définissant une désignation ou une relation du noeud par rapport au noeud adjacent et aux autres noeuds de l'arbre.

FIG. 1

200

RECEIVE NETWORK
TRANSACTION

210

DELAY OR DENY
REQUEST

222

YES

DOES BANDWIDTH
NEEDED EXCEED
DESTINATION NODE
BANDWIDTH?

220

NO

BORROW
BANDWIDTH FROM
ADJACENT NODE

270

GUARANTEE
SERVICE

230

DETECT AT ONE
NODE LACK OF
BANDWIDTH

260

DECREMENT
DESTINATION NODE
BANDWIDTH BY
BANDWIDTH
NEEDED

240

PROCESS THROUGH
NODES OF NETWORK
TO DESTINATION
NODE

250

FIG. 2

300

MONITOR TRAFFIC
VOLUME AT
PROCESSING NODE

310

DETECT VOLUME
BELOW A
PREDEFINED LIMIT

320

RESERVE
PREDEFINED
AMOUNT

330

COMMUNICATE
PREDEFINED
AMOUNT TO
ADJACENT NODE

340

370

MAINTAINING AT
NODES AGGREGATE
BANDWIDTH FOR
DESTINATION NODE

REQUEST/BORROW
NEEDED
BANDWIDTH FROM
ADJACENT NODE

360

DETECT AT
ANOTHER NODE
LACK OF
BANDWIDTH

350

FIG. 3

400

| NETWORK TREE | |
|---|---|

401

402 — NODE₁   * * *   NODEₙ — 403

TRAFFIC MONITOR₁   BANDWIDTH MODIFIER₁

402A

SIGNALING PROCESSOR₁

402B

402C

TRAFFIC MONITORₙ   BANDWIDTH MODIFIERₙ

403A

SIGNALING PROCESSORₙ

403B

403C

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5982748 A
- US 5347511 A
- US 5359593 A
- WO 9826612 A
- EP 1300995 A
- US 6477582 B1
- EP 1202501 A